# EUROPÄISCHE PATENTSCHRIFT

(11) **EP 2 028 438 B1**
(45) Veröffentlichungstag und Bekanntmachung des Hinweises auf die Patenterteilung: **25.03.2015**
(21) Anmeldenummer: 08012891.1
(22) Anmeldetag: 17.07.2008
(51) Int. Cl.: G01B 7/312, G01B 11/27, G01D 1/14, H01B 13/14

(54) **Verfahren zur Visualisierung der Exzentrizität von Kabeln bei der Exzentrizitätsmessung**
Method for visualising the eccentricity of cables when measuring the eccentricity
Procédé de visualisation de l'excentricité de câbles lors de la mesure d'excentricité

(30) Priorität: 11.08.2007 DE 102007037963
(43) Veröffentlichungstag der Anmeldung: 25.02.2009
(73) Patentinhaber: SIKORA AG, 28307 Bremen (DE)
(72) Erfinder: Sikora, Harald, 28357 Bremen (DE)
(74) Vertreter: Hauck Patentanwaltspartnerschaft mbB

(56) Entgegenhaltungen:
- US-A- 5 532 588
- Zumbach AG: "Non-Contact Eccentricity, Concentricity and Diameter Gauge", , 31. August 2005 (2005-08-31), XP002636989, Gefunden im Internet: URL:http://wwww.zumbach.com/PDF/Prospects/ English/ODEX/ODEX10_ODEX.002.0001.E.pdf [gefunden am 2011-05-16]
- ROSSLER V ET AL: "INTELLIGENTER SENSOR MIT U 8820", RFE RADIO FERNSEHEN ELEKTRONIK, HUSS MEDIEN GMBH, BERLIN, DE, Bd. 39, Nr. 2, 1. Januar 1990 (1990-01-01) , Seiten 119-121, XP000113663, ISSN: 1436-1574

## Beschreibung

Die Erfindung bezieht sich auf Verfahren zur Visualisierung der Exzentrizität von Kabeln bei der Exzentrizitätsmessung von Kabeln nach dem Oberbegriff der Patentansprüche 1, 2 und 3.

Bei der Herstellung von Kabeln ist es üblich, die Exzentrizität zu messen, d.h. die Relativlage des Leiters im Kabelmantel. Die exzentrische Lage des Leiters kann bedeuten, daß in einem Umfangsbereich die Wanddicke der Ummantelung nicht mehr für eine ausreichende Isolierung sorgt. Andererseits ist bei der Herstellung angestrebt, die Materialmenge pro Längeneinheit optimal zu halten, d.h. einen zu hohen Materialeinsatz zu vermeiden. Eine Exzentrizitätsmessung stellt fest, ob Verlagerungen des Leiters im Mantel auftreten.

Es sind verschiedene berührende und berührungslos arbeitende Verfahren zur Exzentrizitätsmessung bei Kabeln bekannt geworden. Auf diese soll im Einzelnen nicht eingegangen werden.

Insbesondere Kabel kleineren Durchmessers werden in erheblicher Geschwindigkeit produziert, von einigen Metern pro Sekunde bis zum Beispiel 30 m pro Sekunde. Eine Exzentrizitätsmessung wird zum Beispiel in Meßintervallen von 1 bis 2 Sekunden durchgeführt. In einem Intervall können z.B. mit einem berührungslosen Meßverfahren einige Hundert Meßwerte erzeugt werden. Es ist bekannt, bei der Exzentrizitätsmessung eine Messung gleichzeitig an mehreren in Umfangsrichtung des Kabels beanstandeten Meßorten vorzunehmen. Auf diese Weise ist es möglich, im Hinblick auf Betrag und Richtung die Exzentrizität genauer zu bestimmen. Es ist ferner bekannt, die Meßwerte graphisch so darzustellen, daß der Maschinenführer eine Exzentrizität erkennen und gegebenenfalls geeignete Gegenmaßnahmen ergreifen kann, z.B. durch Verstellung des Extruderwerkzeugs. Die Meßwerte eines Meßintervalls werden im bekannten Verfahren gemittelt. Dabei hat sich gezeigt, daß Proben bei einer optischen Überprüfung Exzentrizitäten aufwiesen, die bei der graphischen Darstellung nicht erkennbar waren.

Zum Beispiel ist aus US 5532588 A bekannt, die Exzentrizität eines bewegten Kabels mit zwei in Umfangsrichtung beabstandeten Sensoreinheiten zu messen und die Messwerte in einem Rechner aufzubereiten. Die Visualisierung der Messwerte erfolgt dabei durch die Darstellung des Kabelquerschnitts.

Daneben ist aus der Produktbeschreibung ODEX®10 ("Non-Contact Eccentricity, Concentricity and Diameter Gauge") der Zumbach AG ein Messgerät bekannt, mit dem die Exzentrizität von Kabeln während des Kabeltransports an vier über den Umfang beabstandeten Orten gleichzeitig gemessen wird. Die Messwerte werden in einem Rechner aufbereitet und graphisch dargestellt, wobei in einem Histogramm eine Häufigkeitsverteilung der Exzentrizität gezeigt werden kann.

Der Erfindung liegt die Aufgabe zugrunde, Verfahren zur Visualisierung von Meßwerten bei der Exzentrizitätsmessung von Kabeln anzugeben, die in einer graphischen Darstellung eine Exzentrizität auch bei schnellen Schwankungen der Exzentrizitätswerte sichtbar machen.

Diese Aufgabe wird durch die jeweiligen Merkmale der Patentansprüche 1, 2 und 3 gelöst.

Bei einem ersten erfindungsgemäßen Verfahren werden während eines Meßintervalls gewonnene Exzentrizitäts-Einzelwerte als Punktwolhe auf dem Display dargestellt, wobei die durch das Meßgerät bedingte Streuung der Meßwerte signifikant kleiner ist als die Streuung der ermittelten Exzentrizitätseinzelwerte.

Bei einem zweiten erfindungsgemäßen Verfahren wird eine Häufigkeitsverteilung von während eines Meßintervalls gewonnenen Exzentrizitätseinzelwerten als Kreisfläche oder Ellipsenfläche dargestellt, wobei der Durchmesser des Kreises der Häufigkeitsverteilung entspricht, während die Lage des Mittelpunkts des Kreises gegenüber dem Nullpunkt des Koordinatensystems ein Maß für die durchschnittliche Exzentrizität im Meßintervall nach Betrag und Richtung ist beziehungsweise die Verteilung der Häufigkeit dem Abstand des Ellipsenumfangs vom Mittelpunkt der Ellipse entspricht und die Richtung der Hauptachse der Ellipse die Exzentrizitätswerte erhöhter Streuung darstellt und die Lage des Mittelpunkts der Ellipse zum Nullpunkt des Koordinatensystems die durchschnittliche Exzentrizität nach Betrag und Richtung wiedergibt.

Bei einem dritten erfindungsgemäßen Verfahren wird eine Häufigkeitsverteilung von während eines Meßintervalls gewonnenen Exzentrizitätseinzelwerten als Kreisring dargestellt, wobei die Breite des Rings der Häufigkeit der Exzentrizitätswerte in der jeweiligen Richtung, der mittlere Abstand der Ringfläche von dem Schwerpunkt der mittleren Zeigerlänge des rotierenden Exzentrizitätsvektors und die Lage des Schwerpunkts des Rings gegenüber dem Nullpunkt des Koordinatensystems der Exzentrizität von Mittelwerten entspricht.

Bei der Erfindung wurde erkannt, daß häufig auch schnelle Exzentrizitätsschwankungen auftreten, die bei der Mittelwertbildung der Exzentrizitätswerte nach den bekannten Verfahren zu keiner Anzeige führen.

Daher geht die Erfindung von einer Exzentrizitätseinzelwert-Verarbeitung aus und visualisiert eine Häufigkeitsverteilung von Einzelwerten, vorzugsweise in einem Koordinatensystem, das gleichfalls im Display erscheint.

Bei den verschiedenen erfindungsgemäßen Möglichkeiten kann beispielsweise die Standardabweichung als Kreisfläche dargestellt werden, wobei der Radius ein Maß für eine Häufigkeit ist, z.B. für die Standardabweichung, während die Lage des Mittelpunktes des Kreises gegenüber dem Nullpunkt des Koordinatensystems ein Maß für die durchschnittliche Exzentrizität nach Betrag und Richtung ist. Schließlich kann auch eine Mehrzahl von Kreisen dargestellt werden, wobei der Durchmesser der Kreise jeweils eine andere Häufigkeitsverteilung definiert. Die Kreislinien können darüber hinaus unterschiedliche Farben aufweisen, um die unterschiedlichen Häufigkeitsverteilungen besser voneinander unterscheidbar zu machen. Eine Kreisdarstellung visualisiert im übrigen, daß die Exzentrizitätseinzelwerte statistisch gleichmäßig um den Mittelpunkt der kreisförmigen Fläche verteilt sind.

Eine ortsrichtige Einblendung von Exzentrizitätseinzelwerten in Form von Punkten auf dem Display entsprechend dem jeweiligen Betrag und der Richtung in das Koordinatensystem über ein Meßintervall von zum Beispiel einer oder mehreren Sekunden läßt eine Punktwolke entstehen, deren Dichte die Häufigkeit der Verteilung der Einzelwerte entspricht. Ein Farbumschlag der dargestellten Punkte kann eine Häufigkeitsverteilung z.B. außerhalb der Standardabweichung oder einer anderen vorgegebenen Häufigkeitsverteilung der Streuung der Einzelwerte deutlicher erkennbar machen.

Liegt zum Beispiel eine erhöhte Streuung der Exzentrizitätseinzelwerte z.B. in einer bevorzugten Ebene, verursacht durch eine Oszillation des Leiters unmittelbar vor Einlauf in den Spritzkopf des Extruders, würde eine Fläche in Form einer Ellipse anstatt eines Kreises abgebildet werden. Die Richtung der Hauptachse der Ellipse entspricht dann der Exzentrizitätsebene erhöhter Streuung, die Verteilung der Häufigkeiten entspricht dem Abstand der ellipsenförmigen Fläche von deren Mittelpunkt (Schwerpunkt). Die Lage des Mittelpunktes in Bezug auf den Nullpunkt des Koordinatensystems gibt Auskunft über die durchschnittliche Exzentrizität nach Betrag und Richtung.

Eine besondere Form von schnellen Exzentrizitätsschwankungen liegt vor, wenn ein Leiter vor dem Einlauf in den Extruder um seine Längsachse rotierend oszilliert. Eine solche Schwingung erzeugt eine Exzentrizität in Abhängigkeit von der Schwingungsamplitude, wobei die Richtung der Schwingungsamplitude mit der Rotationsfrequenz des Leiters umläuft. Obwohl hierbei eine ständige Exzentrizität vorliegt, würde die übliche Darstellung durch Mittelwertbildung diese nicht erkennen lassen. Bedingt durch die schnelle Rotation ist die im Stand der Technik bekannte Darstellung nicht in der Lage, die Exzentrizität anzuzeigen, weil der Mittelwert der rotierenden Exzentrizitätseinzelwerte im Schwerpunkt aller Einzelexzentrizitäten liegt.

Eine Darstellung der Häufigkeitsverteilung bei einer rotierenden Exzentrizität der Einzelwerte ist z.B. durch eine ringförmige Fläche möglich. Die Breite der ringförmigen Fläche entspricht der Häufigkeit von Exzentrizitätseinzelwerten in der jeweiligen Richtung, zum Beispiel deren Standardabweichung. Der mittlere Abstand der Ringfläche von ihrem Schwerpunkt entspricht der jeweiligen mittleren Zeigerlänge des rotierenden Exzentrizitätsvektors. Die Lage des Schwerpunkts in Bezug auf den Nullpunkt des Koordinatensystems entspricht der Exzentrizität der Mittelwerte, zum Beispiel über einen Meßintervall von einer Sekunde.

Eine elliptische oder ovale Form des Ringes deutet darauf hin, daß eine Rotation der Exzentrizitätsschwankung vorliegt, mit in einer Ebene höherer Amplitude der Schwankungsbreite.

Mit Hilfe der Erfindung lassen sich kurzzeitige Schwankungen der Exzentrizität eines Kabels in einfacher und übersichtlicher Form darstellen.

Die Erfindung wird nachfolgend anhand von Zeichnungen näher erläutert.
Fig. 1 zeigt schematisch eine Punkthaufen-Visualisierung nach der Erfindung,
Fig. 2 zeigt ebenfalls eine Punkthaufen-Visualisierung für einen anderen Meßfall,
Fig. 3 zeigt eine Kreisring-Visualisierung nach dem erfindungsgemäßen Verfahren,
Fig. 4 zeigt eine elliptische Visualisierung nach dem erfindungsgemäßen Verfahren.

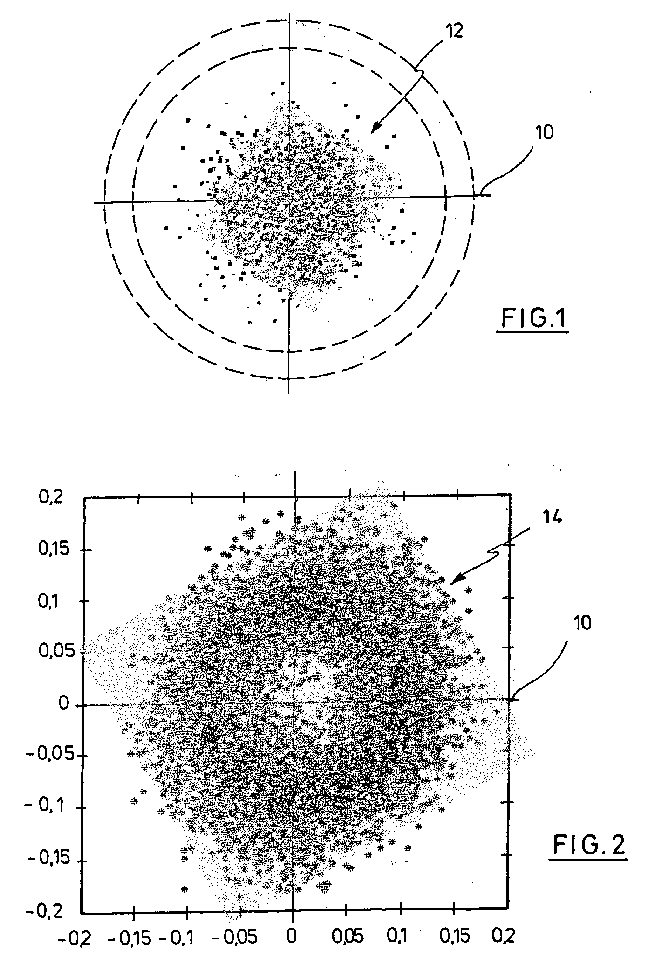

In den Figuren ist das Display, auf dem die Visualisierung von Exzentrizitätswerten stattfindet, nicht gezeigt. Es ist lediglich ein Koordinatensystem 10 angegeben. In Fig. 1 ist ein Punkthaufen 12 zu erkennen. Der Punkthaufen besteht aus gemessenen Exzentrizitätseinzelpunkten, die hier quadratisch dargestellt sind. Die Einzelpunkte sind in einem Meßintervall von zum Beispiel 1 bis 2 Sekunden, mit einer Vielzahl von einzelnen Meßvorgängen, zum Beispiel von mehreren Hundert, ermittelt. Ein bekanntes Exzentrizitätsmeßgerät mißt berührungslos zum Beispiel um den Umfang eines Kabels an acht in gleichem Umfangsabstand beabstandeten Punkten die Lage des Leiters in einer von einem Extruder erzeugten Ummantelung des Kabels. Im nur theoretischen Idealfall ist die Exzentrizität Null. Das würde bedeuten, daß alle Meßwertepunkte im Wesentlichen im Nullpunkt des Koordinatensystems liegen und somit Konzentrizität besteht. Dies ist aber in der Praxis nicht der Fall, vielmehr kommt es zu mehr oder weniger großen Streuungen der Exzentrizitätswerte im Mikrometerbereich. Je größer die Exzentrizität, umso weiter entfernt liegen die Meßpunkte vom Mittelpunkt des Koordinatensystems. Die Richtung der Meßpunkte bzw. ihrer Lage in einem Quadranten besagt außerdem, in welcher Richtung die Exzentrizität liegt.

Durch statistische Bearbeitung der Einzelmeßwerte in einem Rechner, in den die Meßwerte eines Exzentrizitätsmeßgeräts gegeben werden, ermöglicht zum Beispiel die Ermittlung der Standardabweichung der Exzentrizitätswerte und damit deren Darstellung auf dem Display. Die Standardabweichung oder eine vorgegebene Häufigkeitsverteilung kann zum Beispiel durch einen Kreis wiedergegeben werden, der in den Punkthaufen 12 gelegt wird und dessen Mittelpunkt gegenüber dem Nullpunkt des Koordinatensystems 10 versetzt liegen kann. Die Abweichung des Mittelpunkts des Kreises gegenüber dem Koordinaten-Nullpunkt gibt den Betrag und die Richtung der durchschnittlichen Exzentrizität im Meßintervall an.

Während der Produktion bewegt sich das Kabel mit einer nicht unerheblichen Geschwindigkeit. Das betrachtete Meßintervall hat nur eine begrenzte Zeitdauer von zum Beispiel 1-2 Sekunden. Die Exzentrizitätsmessung wird hingegen mehr oder weniger kontinuierlich durchgeführt. Die Meßwerte werden kontinuierlich in den Rechner gegeben, wobei nach Maßgabe der Vortriebsgeschwindigkeit des Kabels die jeweils ältesten Messungen und nach Maßgabe der neu hinzutretenden Meßwerte herausgestellt. Auf diese Weise wird die Exzentrizität nur für jeweils eine bestimmte Länge eines Kabels visualisiert.

In Figur 2 ist im Koordinatensystem 10 ein ringförmiger Punkthaufen 14 zu erkennen. Er entsteht z.B. dadurch, daß der in den Extruder einlaufende Leiter eine rotationsartige Oszillation ausführt, wodurch eine rotierende Exzentrizität beim Aufbringen des Kabelmantels entsteht. Auf der Abszisse bzw. Ordinate sind die betragsmäßigen Exzentrizitätswerte aufgetragen.

Der ringförmige Punkthaufen ermöglicht dem Betrachter bereits oberflächlich eine Anschauung über Ausmaß und Lage der Exzentrizität. Es ist auch möglich, in den Punkthaufen 14 einen Kreisring zu legen, wobei die Dicke des Kreisringes der Häufigkeit von Exzentrizitätseinzelwerten in der jeweiligen Richtung, zum Beispiel deren Standardabweichung, entspricht. Der mittlere Abstand des Ringes von seinem Schwerpunkt entspricht der jeweiligen mittleren Zeigerlänge des rotierenden Exzentrizitätsvektors. Die Lage des Schwerpunktes in Bezug auf den Nullpunkt des Koordinatensystems 10 entspricht der Exzentrizität der Mittelwerte zum Beispiel über das Meßintervall, beispielsweise über eine Sekunde.

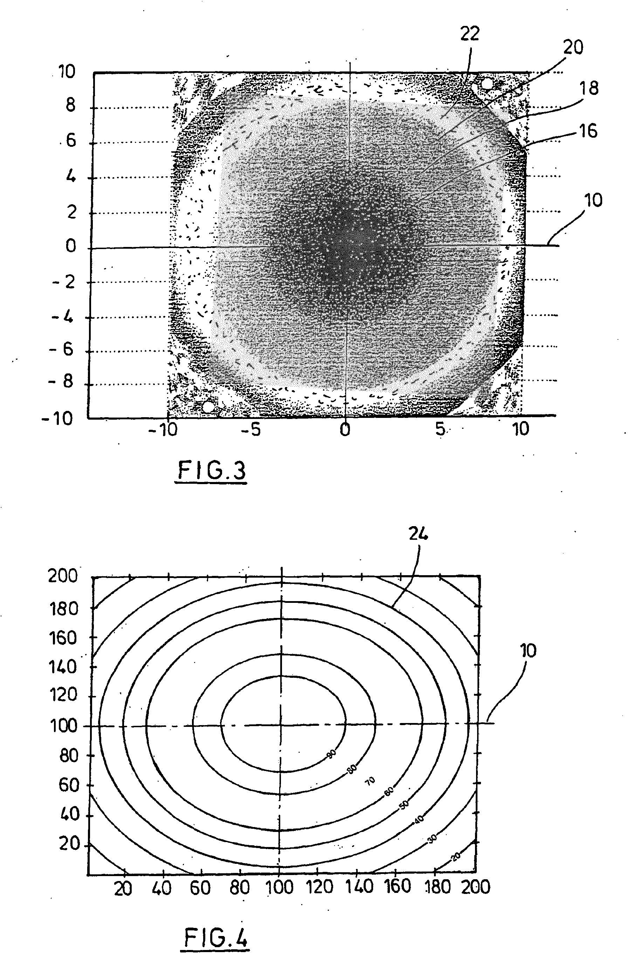

In Figur 3 sind eine Kreisfläche 16 und drei konzentrische Ringflächen 18, 20, 22 zu erkennen. Sie haben jeweils unterschiedliche Farben. Der Durchmesser der Kreisfläche 16 entspricht zum Beispiel der Standardabweichung von Exzentrizitätseinzelwerten während eines Meßintervalls. Die Kreisfläche wird gewonnen durch eine Vielzahl von Exzentrizitätseinzelwerten. Die Ringflächen 18-22 entsprechen weiteren Häufigkeitsverteilungen. Im gezeigten Fall ist der Schwerpunkt der Kreisfläche und der Ringflächen 18-20 im Nullpunkt des Koordinatensystems. Falls dies nicht der Fall ist, ist der mittlere Abstand eines Ringes von seinem Schwerpunkt entsprechend der jeweiligen mittleren Zeigerlänge des Exzentrizitätsvektors, wobei die Lage des Schwerpunktes in Bezug zum Nullpunkt des Koordinatensystems 10 nach Betrag und Richtung der durchschnittlichen Exzentrizität im Meßintervall entspricht. Auch mit dieser Darstellung ist der Führer einer Produktionsanlage imstande, die Exzentrizität des Kabels auch bei schnellen Schwankungen der Exzentrizität zu erkennen, um entsprechende Gegenmaßnahmen einzuleiten.

In Figur 4 ist eine Mehrzahl von Ellipsen 24 in einem Koordinatensystem 10 dargestellt. Die Ellipsenumfänge können jeweils unterschiedliche Farbe haben. Linienförmige Häufigkeitsverteilungen der Einzelmeßwerte bei der Exzentrizitäts-messung ergeben eine Ellipse, wenn eine erhöhte Streuung der Exzentrizitätseinzelwerte in einer bevorzugten Ebene vorliegt. So kann zum Beispiel der Leiter des Kabels vor Eintritt in den Extruder in einer Ebene senkrecht zur Leiterachse schwingen. Die Richtung der Hauptachse der einzelnen Ellipsen 24 entspricht dann der Exzentrizitätsebene erhöhter Streuung. Die Verteilung der Häufigkeiten entspricht dem Abstand der Ellipsenlinien 24 von deren Mittelpunkt (Schwerpunkt). Die Lage des Mittelpunktes in Bezug auf den Nullpunkt des Koordinatensystems gibt Auskunft über die durchschnittliche Exzentrizität, wie bereits beschrieben.

## Patentansprüche

1. Verfahren zur Visualisierung der Exzentrizität von Kabeln, die bei der Exzentrizitätsmessung der Kabel gewonnen wird, wobei Exzentrizitätsmessungen während des Transports des Kabels an mehreren über den Umfang des Kabels beabstandeten Orten gleichzeitig erfolgen und die Meßwerte nach Aufbereitung in einem Rechner auf einem Display graphisch dargestellt werden, **dadurch gekennzeichnet, daß** während eines Meßintervalls gewonnene Exzentrizitäts-Einzelwerte als Punktwolke auf dem Display dargestellt werden, wobei die meßgerätebedingte Streuung der Meßwerte signifikant kleiner ist als die Streuung der Exzentrizitätseinzelwerte.

2. Verfahren zur Visulisierung der Exzentrizität von Kabeln, die bei der Exzentrizitätsmessung der Kabel gewonnen wird, wobei Exzentrizitätsmessungen während des Transport des Kabels an mehreren über den Umfang des Kabels beanstandeten Orten gleichzeitig erfolgen und die Meßwerte nach Aufbereitung in einem Rechner auf einem Display graphisch dargestellt werden, **dadurch gekennzeichnet, daß** eine Häufigkeitsverteilung von während eines Meßintervalls gewonnen Exzentrizitätseinzelwerten als Kreisfläche oder Ellipsenfläche dargestellt wird, wobei der Durchmesser des Kreises der Häufigkeitsverteilung entspricht, während die Lage des Mittelpunkts des Kreises gegenüber dem Nullpunkt eines Koordinatensystems ein Maß für die durchschnittliche Exzentrizität im Meßintervall nach Betrag und Richtung ist beziehungsweise die Verteilung der Häufigkeit dem Abstand des Ellipsenumfangs vom Mittelpunkt der Ellipse entspricht und die Richtung der Hauptachse der Ellipse die Exzentrizitätswerte erhöhter Streuung darstellt und die Lage des Mittelpunkts der Ellipse zum Nullpunkt des Koordinatensystems die durchschnittliche Exzentrizität nach Betrag und Richtung wiedergibt.

3. Verfahren zur Visualisierung der Exzentrizität von Kabeln, die bei der Exzentrizitätsmessung der Kabel gewonnen wird, wobei Exzentrizitätsmessungen während des Transports des Kabels an mehreren über den Umfang des Kabels beanstandeten Orten gleichzeitig erfolgen und die Meßwerte nach Aufbereitung in einem Rechner auf einem Display graphisch dargestellt werden, **dadurch gekennzeichnet, daß** eine Häufigkeitsverteilung von während eines Meßintervalls gewonnen Exzentrizitätseinzelwerten als Kreisring dargestellt wird, wobei die Breite des Rings der Häufigkeit der Exzentrizitätswerte in der jeweiligen Richtung, der mittlere Abstand der Ringfläche von dem Schwerpunkt der mittleren Zeigerlänge des rotierenden Exzentrizitätsvektors und die Lage des Schwerpunkts des Rings gegenüber dem Nullpunkt eines Koordinatensystems der Exzentrizität von Mittelwerten entspricht.

4. Verfahren nach Anspruch 1, **dadurch gekennzeichnet, daß** die außerhalb einer vorgegebenen Häufigkeitsverteilung liegenden Punkte eine andere Farbe aufweisen als die innerhalb der Häufigkeitsverteilung liegenden Punkte.

5. Verfahren nach Anspruch 1 oder 2, **dadurch gekennzeichnet, daß** in der Punktwolke eine oder mehrere Kreise oder Ellipsenlinien eingezeichnet werden, die einer vorgegebenen Häufigkeitsverteilung der Meßpunkte der Punktwolke entsprechen.

6. Verfahren nach einem der Ansprüche 1 bis 5, **dadurch gekennzeichnet, daß** bei fortlaufendem Transport des Kabels die Häufigkeitsverteilung der Exzentrizitätseinzelwerte für eine vorgegebene Kabellänge oder ein vorgegebenes Zeitintervall dargestellt werden.

7. Verfahren nach einem der Ansprüche 1 bis 6, **dadurch gekennzeichnet, daß** die Häufigkeitsverteilung in einem Koordinatensystem visualisiert wird.

8. Verfahren nach Anspruch 2, **dadurch gekennzeichnet, daß** Häufigkeitsverteilungen in einer Anzahl von Kreis- oder Ellipsenlinien dargestellt werden, deren Radius die jeweilige Häufigkeitsverteilung angibt.

## Claims

1. A method for visualising the eccentricity of cables which is acquired in the eccentricity measurement of the cables, wherein eccentricity measurements take place at the same time on plural locations spaced apart across the perimeter of the cable during the transportation of the cable, and the measurement values are represented graphically on a display after being processed in a computer, **characterised in that** a frequency distribution of individual eccentricity values acquired during the measurement interval is represented on the display, wherein the scattering caused by measuring instruments is significantly smaller than the scattering of the individual eccentricity values.

2. A method for visualising the eccentricity of cables which is acquired in the eccentricity measurement of the cables, wherein eccentricity measurements take place at the same time on plural locations spaced apart across the perimeter of the cable during the transportation of the cable, and the measurement values are represented graphically on a display after being processed in a computer, **characterised in that** a frequency distribution is represented as a circle area or an ellipse area, wherein the diameter of the circle corresponds to a frequency distribution, while the position of the centre point of the circle with respect to the zero point of the coordinate system is a measure for the average eccentricity according to amount and direction, or the frequency distribution is represented as an ellipse area, wherein the distribution of the frequency corresponds to the distance of the ellipse perimeter from the centre point of the ellipse, and the direction of the major axis of the ellipse represents the eccentricity values of increased scattering and the position of the centre point of the ellipse with respect to the zero point of the coordinate system represents the average eccentricity according to amount and direction.

3. A method for visualising the eccentricity of cables which is acquired in the eccentricity measurement of the cables, wherein eccentricity measurements take place at the same time on plural locations spaced apart across the perimeter of the cable during the transportation of the cable, and the measurement values are represented graphically on a display after being processed in a computer, **characterised in that** the frequency distribution is represented as an annular ring, wherein the width of the ring corresponds to the frequency of the eccentricity values in the respective direction, the mean distance of the ring area from its centre of gravity corresponds to the mean vector length of the rotating eccentricity vector and the position of the centre of gravity of the ring with respect to the zero point of a coordinate system corresponds to the eccentricity of mean values.

4. A method according to claim 1, **characterised in that** the points situated outside a preset frequency distribution have another colour than the points situated inside the frequency distribution

5. A method according to claim 1 or 2, **characterised in that** one or plural circles or ellipse lines are drawn in in the aggregate of points, which correspond to a preset frequency distribution of the measuring points of the aggregate of points.

6. A method according to one of the claims 1 to 5, **characterised in that** the frequency distribution of the individual eccentricity values for a preset cable length or for a preset time interval is represented during the continuous transportation of the cable.

7. A method according to one of the claims 1 or 6, **characterised in that** the frequency distribution is visualised in a coordinate system.

8. A method according to claim 2, **characterised in that** plural frequency distributions are represented in a corresponding number of circle lines or ellipse lines, the radius of which indicates the respective frequency distribution

## Revendications

1. Procédé de visualisation de l'excentricité de câbles, qu'on conçoit lors de la mesure d'excentricité des câbles, dans lequel des mesures d'excentricité sont faites lors de la transportation du câble en même temps sur plusieurs lieux espacés à travers la périphérie du câble, et les valeurs de mesure sont graphiquement représentées après traitement dans un ordinateur, **caractérisé en ce que** des valeurs d'excentricité individuelles conçues pendant un intervalle de mesure sont représentées comme un nuage de points sur l'écran, la dispersion des valeurs de mesure causée par les instruments de mesure étant plus petite de façon signifiante que la dispersion des valeurs d'excentricité individuelles.

2. Procédé de visualisation de l'excentricité de câbles, qu'on conçoit lors de la mesure d'excentricité des câbles, dans lequel des mesures d'excentricité sont faites lors de la transportation du câble en même temps sur plusieurs lieux espacés à travers la périphérie du câble, et les valeurs de mesure sont graphiquement représentées après traitement dans un ordinateur, **caractérisé en ce que** une distribution de la fréquence des valeurs d'excentricité individuelles conçues pendant un intervalle de mesure est représentée comme une surface circulaire ou une surface d'ellipse, le diamètre du cercle correspondant à la distribution de la fréquence, pendant que la position du centre du cercle par rapport au point zéro d'un système de coordonnées est une mesure pour l'excentricité moyenne dans l'intervalle de mesure selon la valeur absolue et la direction, ou respectivement la distribution de la fréquence correspond à la distance du périmètre d'ellipse du centre de l'ellipse et la direction de l'axe principal de l'ellipse représente les valeurs d'excentricité de dispersion augmentée, et la position du centre de l'ellipse par rapport au point zéro du système de coordonnées représente l'excentricité moyenne selon la valeur absolue et la direction.

3. Procédé de visualisation de l'excentricité de câbles, qu'on conçoit lors de la mesure d'excentricité des câbles, dans lequel des mesures d'excentricité sont faites lors de la transportation du câble en même temps sur plusieurs lieux espacés à travers la périphérie du câble, et les valeurs de mesure sont graphiquement représentées après traitement dans un ordinateur, **caractérisé en ce que** une distribution de la fréquence des valeurs d'excentricité individuelles conçues pendant un intervalle de mesure est représentée comme un anneau de cercle, la largeur de l'anneau correspondant à la fréquence des valeurs d'excentricité dans la direction respective, la distance moyenne de la surface d'anneau du centre de gravité de la longueur d'aiguille moyenne du vecteur d'excentricité rotatif et la position du centre de gravité de l'anneau par rapport au pont zéro du système de coordonnées représentant l'excentricité de valeurs moyennes.

4. Procédé selon la revendication 1, **caractérisé en ce que** les points situés au-dehors d'une distribution de la fréquence donnée ont une autre couleur que les points situés en l'espace de la distribution de la fréquence.

5. Procédé selon la revendication 1 ou 2, **caractérisé en ce que** un ou plusieurs cercles ou ellipses sont dessinés dans le nuage de points, qui correspondent à une distribution de la fréquence des valeurs de mesure du nuage de points donnée.

6. Procédé selon l'une quelconque des revendications 1 à 5, **caractérisé en ce que** lors de la transportation continue du câble, la distribution de la fréquence des valeurs d'excentricité individuelles est représentée pour une longueur de câble donnée ou pour un intervalle de temps donné.

7. Procédé selon l'une quelconque des revendications 1 à 6, **caractérisé en ce que** la distribution de la fréquence est visualisée dans un système de coordonnées.

8. Procédé selon la revendication 2, **caractérisé en ce que** des distributions de la fréquence sont représentées dans un nombre de lignes de cercle ou d'ellipse, dont le rayon indique la distribution de la fréquence respective.
